# EUROPEAN PATENT SPECIFICATION

(11) **EP 4 647 309 B1**
(45) Date of publication and mention of the grant of the patent: **14.10.2026**
(21) Application number: 23847760.8
(22) Date of filing: 30.12.2023
(51) Int. Cl.: B60W 30/095, B60W 30/16, B60W 50/14, B60W 30/18, B60W 50/00

(54) **CONTROL DEVICE AND CONTROL METHOD**
STEUERUNGSVORRICHTUNG UND STEUERUNGSVERFAHREN
DISPOSITIF DE COMMANDE ET PROCÉDÉ DE COMMANDE

(30) Priority: 05.01.2023 JP 2023000747
(43) Date of publication of application: 12.11.2025
(73) Proprietor: Robert Bosch GmbH, 70442 Stuttgart (DE)
(72) Inventor: NAGAMIZO, Taishi, Yokohama-shi, Kanagawa 224-8501 (JP)
(86) International application number: PCT/IB2023/063405
(87) International publication number: WO 2024/147072

(56) References cited:
- WO-A1-2021/260480
- US-A1- 2020 047 755
- US-A1- 2020 130 690

## Description

### Technical Field

The present invention relates to a controller and a control method capable of optimizing notification in positional relationship adjustment operation of a motorcycle.

### Background Art

Conventionally, various techniques for assisting with driving by a rider of a motorcycle have been proposed. For example, a driver-assistance system is disclosed in PTL 1. The driver-assistance system warns the rider of the motorcycle that the motorcycle inappropriately approaches an obstacle on the basis of information detected by a sensor device that detects the obstacle present in a travel direction or substantially in the travel direction. WO 2021/260480 discloses a control device that can support the special characteristics of travel of a saddled vehicle, a rider assistance system equipped with such a control device, and a control method that can support the special characteristics of travel of a saddled vehicle. On the basis of output from at least one surrounding environment detection device surrounding environment information of a saddled vehicle is acquired, the presence or absence of travel by the saddled vehicle in a manner of passing between rows of vehicles is analyzed on the basis of the surrounding environment information, and a rider assistance operation corresponding to the analysis results thereof is executed. Warnings are provided to the rider when a probability of collision with an object in front of the saddled vehicle is determined. Furthermore, the system assists overtaking by providing additional acceleration when an overtaking intention of the rider is detected.

### Citation List

### Patent Literature

PTL 1: JP2009-116882A

### Summary of Invention

### Technical Problem

By the way, positional relationship adjustment operation is available as a technique for assisting with driving of a vehicle. In the positional relationship adjustment operation, a speed of an own vehicle is automatically controlled such that a positional relationship between the own vehicle and a vehicle ahead approaches a target positional relationship. During execution of the positional relationship adjustment operation, a driver of the own vehicle can be notified according to a collision possibility of the own vehicle with the vehicle ahead. It is considered to apply the positional relationship adjustment operation to the motorcycle. Here, since body behavior of the motorcycle is more unstable than that of a four-wheeled automobile and the like, it is important to notify the motorcycle rider from a perspective of improvement in safety, and the like. Therefore, there is a high need to optimize the notification in the positional relationship adjustment operation of the motorcycle.

The present invention has been made with the above-described problem as the background and therefore obtains a controller and a control method capable of optimizing notification in positional relationship adjustment operation of a motorcycle.

### Solution to Problem

A controller according to the invention is a controller that controls behavior of a motorcycle, and includes an execution section that executes positional relationship adjustment operation to automatically control a speed of the motorcycle such that a positional relationship between the motorcycle and a vehicle ahead of the motorcycle approaches a target positional relationship. During execution of the positional relationship adjustment operation, the execution section: executes first notification operation to notify a rider of the motorcycle in the case where a collision possibility of the motorcycle with the vehicle ahead exceeds a reference collision possibility; executes acceleration increase operation to increase acceleration of the motorcycle in the case where it is determined that the rider has an intention to overtake the vehicle ahead; and changes the first notification operation according to whether the acceleration increase operation is currently executed.

A control method according to the invention is a control method for controlling behavior of a motorcycle, and includes: executing positional relationship adjustment operation by an execution section of a controller to automatically control a speed of the motorcycle such that a positional relationship between the motorcycle and a vehicle ahead of the motorcycle approaches a target positional relationship. During execution of the positional relationship adjustment operation, the execution section: executes first notification operation to notify a rider of the motorcycle in the case where a collision possibility of the motorcycle with the vehicle ahead exceeds a reference collision possibility; executes acceleration increase operation to increase acceleration of the motorcycle in the case where it is determined that the rider has an intention to overtake the vehicle ahead; and changes the first notification operation according to whether the acceleration increase operation is currently executed.

### Advantageous Effects of Invention

In the controller and the control method according to the invention, the execution section of the controller executes the positional relationship adjustment operation to automatically control the speed of the motorcycle such that the positional relationship between the motorcycle and the vehicle ahead of the motorcycle approaches the target positional relationship. During the execution of the positional relationship adjustment operation, the execution section: executes the first notification operation to notify the rider of the motorcycle in the case where the collision possibility of the motorcycle with the vehicle ahead exceeds the reference collision possibility; executes the acceleration increase operation to increase the acceleration of the motorcycle in the case where it is determined that the rider has the intention to overtake the vehicle ahead; and changes the first notification operation according to whether the acceleration increase operation is currently executed. As a result, in the case where the acceleration increase operation is executed during the execution of the positional relationship adjustment operation, the first notification operation can be executed by taking the execution of the acceleration increase operation into consideration. Therefore, it is possible to optimize the notification in the positional relationship adjustment operation of the motorcycle.

### Brief Description of Drawings

Fig. 1 is a schematic view illustrating an outline configuration of a motorcycle according to an embodiment of the invention.
Fig. 2 is a block diagram illustrating an example of a functional configuration of a controller according to the embodiment of the invention.
Fig. 3 is a view illustrating a situation where the motorcycle according to the embodiment of the invention and a vehicle ahead are traveling.
Fig. 4 is a flowchart illustrating an example of an overall processing procedure that is related to acceleration increase operation and is executed by the controller according to the embodiment of the invention.
Fig. 5 is a flowchart illustrating an example of a detailed processing procedure in the acceleration increase operation that is executed by the controller according to the embodiment of the invention.
Fig. 6 is a flowchart illustrating an example of a first processing procedure that is related to first notification operation and is executed by the controller according to the embodiment of the invention.
Fig. 7 is a flowchart illustrating an example of a second processing procedure that is related to the first notification operation and is executed by the controller according to the embodiment of the invention.
Fig. 8 is a flowchart illustrating an example of a processing procedure that is related to second notification operation and is executed by the controller according to the embodiment of the invention.
Fig. 9 is a flowchart illustrating an example of a processing procedure that is related to setting of upper limit acceleration and that is executed by the controller according to the embodiment of the invention.

### Description of Embodiments

A description will hereinafter be made on a controller and a control method according to the invention with reference to the drawings.

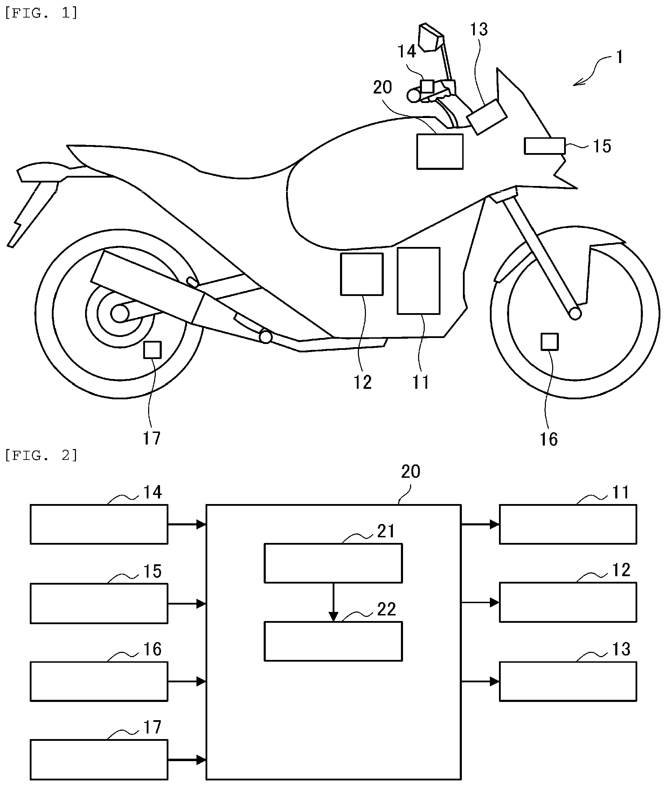

The following description will be made on a controller that is used for a two-wheeled motorcycle (see a motorcycle 1 in Fig. 1). However, a vehicle as a control target of the controller according to the invention may be a motorcycle other than the two-wheeled motorcycle. The motorcycles include a vehicle having an engine as a power source, a vehicle having an electric motor as the power source, and the like. Examples of the motorcycles are a motorbike, a scooter, and an electric scooter.

In addition, the following description will be made on a case where the engine (more specifically, an engine 11 in Fig. 1, which will be described below) is mounted as a drive source that can output power for driving a drive wheel. However, as the drive source, a drive source other than the engine (for example, the electric motor) may be mounted, or plural drive sources may be mounted.

Furthermore, the following description will be made on a case where a control unit (more specifically, a hydraulic pressure control unit 12 in Fig. 1, which will be described below) that controls a hydraulic pressure of a brake fluid is adopted as a control unit for a braking force generated on a wheel. However, a control unit (a so-called brake-by-wire) that controls a position of a braking section itself of the wheel by an electric signal may be adopted as the control unit for the braking force generated on the wheel.

A configuration, operation, and the like, which will be described below, merely constitute one example. The controller and the control method according to the invention are not limited to a case with such a configuration, such operation, and the like and are defined by the appended claims.

The same or similar description will appropriately be simplified or will not be made below. In the drawings, the same or similar members or portions will not be denoted by a reference sign or will be denoted by the same reference sign. A detailed structure will appropriately be illustrated in a simplified manner or will not be illustrated.

### <Configuration of Motorcycle>

A description will be made on a configuration of the motorcycle 1 according to an embodiment of the invention with reference to Fig. 1 to Fig. 3.

Fig. 1 is a schematic view illustrating an outline configuration of the motorcycle 1. The motorcycle 1 is a two-wheeled motorcycle that corresponds to an example of the motorcycle according to the invention. As illustrated in Fig. 1, the motorcycle 1 includes the engine 11, the hydraulic pressure control unit 12, a display device 13, an input device 14, a surrounding environment sensor 15, a front-wheel rotational frequency sensor 16, a rear-wheel rotational frequency sensor 17, and a controller (ECU) 20.

The engine 11 corresponds to an example of the drive source for the motorcycle 1, and can output the power for driving the drive wheel (more specifically, a rear wheel) . For example, the engine 11 is provided with: one or plural cylinders, each of which is formed with a combustion chamber therein; a fuel injector that injects fuel into the combustion chamber; and an ignition plug. When the fuel is injected from the fuel injector, air-fuel mixture containing air and the fuel is produced in the combustion chamber, and the air-fuel mixture is then ignited by the ignition plug and burned. Consequently, a piston provided in the cylinder reciprocates to cause a crankshaft to rotate. In addition, a throttle valve is provided to an intake pipe of the engine 11, and an intake air amount to the combustion chamber varies according to a throttle opening amount as an opening amount of the throttle valve.

The hydraulic pressure control unit 12 is a unit that has a function to control the braking force generated on the wheel. For example, the hydraulic pressure control unit 12 includes components (for example, a control valve and a pump) that are provided on an oil channel connecting a master cylinder and a wheel cylinder and control a brake hydraulic pressure in the wheel cylinder. The braking force generated on the wheel is controlled when operation of the components in the hydraulic pressure control unit 12 is controlled. The hydraulic pressure control unit 12 may control the braking force generated on each of a front wheel and the rear wheel or may only control the braking force generated on one of the front wheel and the rear wheel.

The display device 13 has a display function to display information visually. An example of the display device 13 is a liquid-crystal display. For example, the display device 13 is provided in front of a handlebar in the motorcycle 1. However, arrangement of the display device 13 to a vehicle body is not particularly limited.

The input device 14 accepts various operations by the rider. For example, the input device 14 is provided to the handlebar and includes a push button or the like that is used for the rider's operation. Information on the rider's operation using the input device 14 is output to the controller 20.

The surrounding environment sensor 15 detects surrounding environment information on environment around the motorcycle 1. More specifically, the surrounding environment sensor 15 is provided to a front portion of the motorcycle 1, and detects the surrounding environment information in front of the motorcycle 1. The surrounding environment information that is detected by the surrounding environment sensor 15 is output to the controller 20.

The surrounding environment information that is detected by the surrounding environment sensor 15 may be information on a distance to or an orientation of a target object that is located around the motorcycle 1 (for example, a relative position, a relative distance, a relative speed, relative acceleration, or the like), or may be a characteristic of the target object that is located around the motorcycle 1 (for example, a type of the target object, a shape of the target object itself, a mark on the target object, or the like). Examples of the surrounding environment sensor 15 are a radar, a Lidar sensor, an ultrasonic sensor, and a camera.

The surrounding environment information can also be detected by a surrounding environment sensor that is mounted to another vehicle or by an infrastructure facility. In other words, the controller 20 can also acquire the surrounding environment information via wireless communication with the other vehicle or the infrastructure facility.

The front-wheel rotational frequency sensor 16 is a wheel rotational frequency sensor that detects a rotational frequency of the front wheel (for example, a rotational frequency of the front wheel per unit time [rpm], a travel distance of the front wheel per unit time [km/h], or the like), and outputs a detection result. The front-wheel rotational frequency sensor 16 may detect another physical quantity that can substantially be converted to the rotational frequency of the front wheel. The front-wheel rotational frequency sensor 16 is provided to the front wheel.

The rear-wheel rotational frequency sensor 17 is a wheel rotational frequency sensor that detects a rotational frequency of the rear wheel (for example, the rotational frequency of the rear wheel per unit time [rpm], a travel distance of the rear wheel per unit time [km/h], or the like), and outputs a detection result. The rear-wheel rotational frequency sensor 17 may detect another physical quantity that can substantially be converted to the rotational frequency of the rear wheel. The rear-wheel rotational frequency sensor 17 is provided to the rear wheel.

The controller 20 controls behavior of the motorcycle 1. For example, a part or whole of the controller 20 is a microcomputer, a microprocessor unit, or the like. Alternatively, the part or the whole of the controller 20 may be one whose firmware and the like can be updated, or may be a program module or the like that is executed by a command from a CPU or the like, for example. The controller 20 may be provided as one unit or may be divided into plural units, for example.

As illustrated in Fig. 2, the controller 20 includes an acquisition section 21 and an execution section 22, for example. The controller 20 communicates with each of the devices (for example, the engine 11, the hydraulic pressure control unit 12, the display device 13, the input device 14, the surrounding environment sensor 15, the front-wheel rotational frequency sensor 16, and the rear-wheel rotational frequency sensor 17) of the motorcycle 1. In detail, the controller 20 is mutually communicable with some of the devices such as the engine 11. The controller 20 can also control operation of each of the devices (for example, the engine 11, the hydraulic pressure control unit 12, and the display device 13) of the motorcycle 1.

The acquisition section 21 acquires information from each of the devices in the motorcycle 1, and outputs the acquired information to the execution section 22. For example, the acquisition section 21 acquires information from the input device 14, the surrounding environment sensor 15, the front-wheel rotational frequency sensor 16, and the rear-wheel rotational frequency sensor 17. In the present specification, the acquisition of the information can include extraction, generation (for example, calculation), and the like of the information.

The execution section 22 executes various types of control by controlling operation of each of the devices of the motorcycle 1. For example, the execution section 22 controls the operation of the engine 11, the hydraulic pressure control unit 12, and the display device 13.

In particular, the execution section 22 can execute positional relationship adjustment operation. The positional relationship adjustment operation is operation to automatically control a speed of the motorcycle 1 such that a positional relationship between the motorcycle 1 and a vehicle ahead of the motorcycle 1 approaches a target positional relationship.

Hereinafter, a description will be made on an example in which adaptive cruise control is executed as the positional relationship adjustment operation. Here, the positional relationship adjustment operation only needs to be operation to automatically control the speed of the motorcycle 1 such that the positional relationship between the motorcycle 1 and the vehicle ahead approaches the target positional relationship, and may be operation other than the adaptive cruise control. For example, the positional relationship adjustment operation may be operation that is not canceled even with an accelerator operation by the rider and changes the target positional relationship according to an operation amount of the accelerator operation.

The execution section 22 initiates the adaptive cruise control with the rider's operation using the input device 14 as a trigger, for example. In the adaptive cruise control, the execution section 22 automatically controls the speed of the motorcycle 1 without relying on an accelerating/decelerating operation (that is, the accelerator operation and a brake operation) by the rider. The execution section 22 can control the speed of the motorcycle 1, for example, on the basis of information on the speed of the motorcycle 1 that is acquired on the basis of the rotational frequency of the front wheel and the rotational frequency of the rear wheel. The adaptive cruise control is canceled when the rider performs a particular operation such as the brake operation.

In the adaptive cruise control, for example, a target inter-vehicle distance that is a target value of an inter-vehicle distance between the motorcycle 1 and the vehicle ahead is set, and the execution section 22 controls the speed of the motorcycle 1 such that the inter-vehicle distance between the motorcycle 1 and the vehicle ahead is maintained at the target inter-vehicle distance. In other words, such a positional relationship that the inter-vehicle distance between the motorcycle 1 and the vehicle ahead is the target inter-vehicle distance corresponds to the target positional relationship. Here, the inter-vehicle distance may mean a distance in a direction along a lane (more specifically, a travel lane of the motorcycle 1) or may mean a linear distance. For example, the acquisition section 21 acquires the inter-vehicle distance between the motorcycle 1 and the vehicle ahead on the basis of the surrounding environment information of the motorcycle 1, and, based on the thus-acquired inter-vehicle distance, the execution section 22 can control the speed of the motorcycle 1 as described above.

However, in the adaptive cruise control, for example, a target passing time difference that is a target value of a passing time difference (more specifically, a time taken for the motorcycle 1 to pass a current location of the vehicle ahead from a current time point) may be set, and the execution section 22 may control the speed of the motorcycle 1 such that the passing time difference is maintained to be the target passing time difference. In this case, such a positional relationship that the passing time difference is the target passing time difference corresponds to the target positional relationship. For example, the acquisition section 21 acquires the passing time difference on the basis of the surrounding environment information of the motorcycle 1. Then, based on the thus-acquired passing time difference, the execution section 22 can control the speed of the motorcycle 1 as described above.

In addition, the execution section 22 can execute the acceleration increase operation during the execution of the positional relationship adjustment operation (for example, the adaptive cruise control). The acceleration increase operation is operation to assist the rider in overtaking the vehicle ahead by increasing acceleration of the motorcycle 1.

A case where the acceleration has a positive value corresponds to a case where the motorcycle 1 is being accelerated. A case where the acceleration has a negative value (that is, a case where the deceleration is generated) corresponds to a case where the motorcycle 1 is being decelerated. That is, an increase in the acceleration of the motorcycle 1 includes: a reduction in an absolute value of the deceleration of the currently decelerated motorcycle 1; shifting of the motorcycle 1 from a decelerated state to an accelerated state; and an increase in an absolute value of the acceleration of the currently accelerated motorcycle 1.

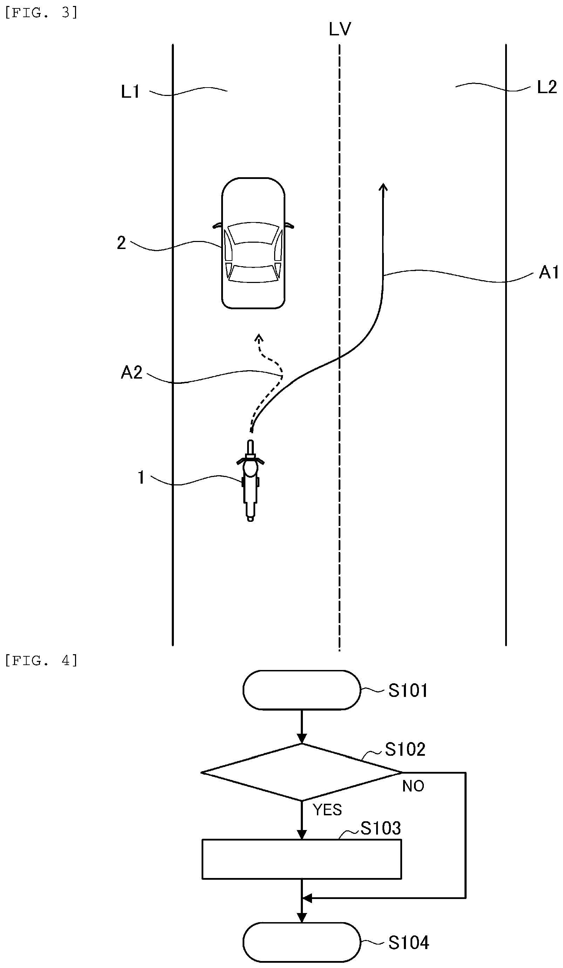

Fig. 3 is a view illustrating a situation where the motorcycle 1 and a vehicle ahead 2 are traveling. In an example illustrated in Fig. 3, a lane L1 and a lane L2 are adjacent to each other across a lane boundary LV. The motorcycle 1 and the vehicle ahead 2 are traveling in the lane L1. The vehicle ahead 2 is located ahead of the motorcycle 1. The lane L2 is a passing lane. In the example illustrated in Fig. 3, the vehicle ahead 2 is a positional relationship adjustment target in the positional relationship adjustment operation (for example, the adaptive cruise control). In the example illustrated in Fig. 3, the vehicle ahead 2 is a four-wheeled automobile. However, the positional relationship adjustment target in the positional relationship adjustment operation may be a vehicle other than the four-wheeled automobile (for example, a motorcycle or the like).

In the example illustrated in Fig. 3, the acceleration increase operation is executed in the case where it is determined that the rider of the motorcycle 1 has an intention of overtaking the vehicle ahead 2 (for example, in the case where a right turn signal of the motorcycle 1 is actuated). For example, it is determined that the rider has the intention of overtaking the vehicle ahead 2 when a turn signal on the passing lane side of the motorcycle 1 (the right turn signal in the example illustrated in Fig. 3) is actuated, or the like. As a result, the acceleration of the motorcycle 1 is increased, and, as indicated by a solid arrow A1, the rider can overtake the vehicle ahead 2.

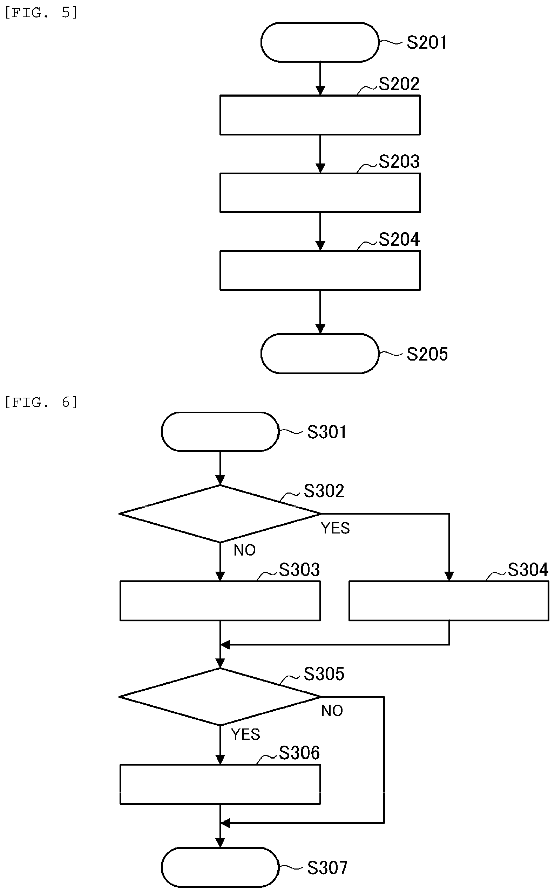

A detailed description on processing related to the acceleration increase operation will be made below with reference to Fig. 4 and Fig. 5.

Here, during execution of the positional relationship adjustment operation (for example, the adaptive cruise control), in the case where the collision possibility of the motorcycle 1 with the vehicle ahead 2 exceeds a reference collision possibility (more specifically, in the case where a rate of the collision possibility exceeds a standard), the execution section 22 executes first notification operation to notify the rider of the motorcycle 1. In the first notification operation, a notification is made for a purpose of improving safety in such a case. For example, in the first notification operation, the rider is notified of a request to perform a cancellation operation of the positional relationship adjustment operation or notified of a request to perform an acceleration reducing operation. As a result, contact between the motorcycle 1 and the vehicle ahead 2, or the like is avoided, and the safety is thereby improved. For example, when the notification that requests the cancellation operation of the positional relationship adjustment operation is made, the behavior of the motorcycle 1 is controlled by a driving operation by the rider himself/herself, and the rider can drive the motorcycle 1 in a manner to avoid the vehicle ahead 2. In addition, for example, when the notification that requests the acceleration reducing operation is made, the motorcycle 1 can be decelerated by the rider's operation.

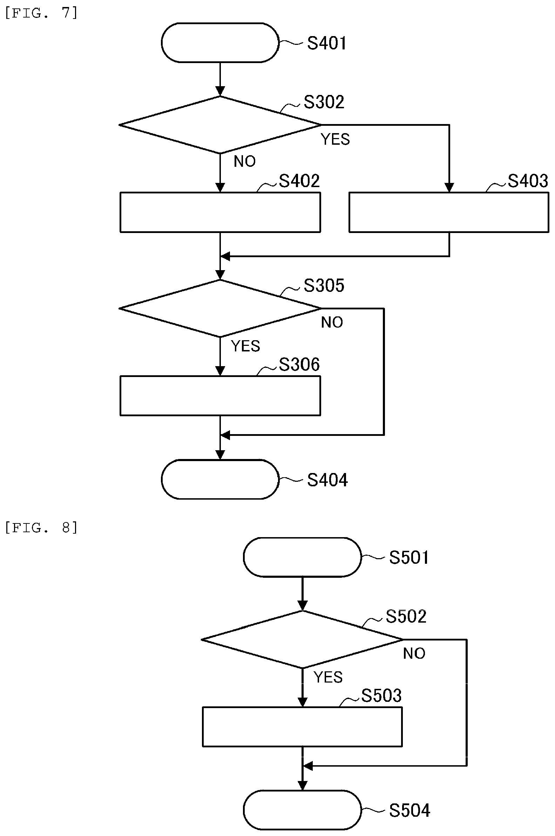

A detailed description on processing related to the first notification operation will be made below with reference to Fig. 6 and Fig. 7.

In the example illustrated in Fig. 3, even when the acceleration increase operation is executed, the rider possibly hesitates to overtake the vehicle ahead 2 and thus does not overtake the vehicle ahead 2 depending on a traffic condition in the lane L2. In such a case, for example, as indicated by a broken arrow A2, the motorcycle 1 keeps traveling behind the vehicle ahead 2 and approaches the vehicle ahead 2. Also, in such a case, the first notification operation is executed when the collision possibility of the motorcycle 1 with the vehicle ahead 2 exceeds the reference collision possibility.

During the execution of the positional relationship adjustment operation, the behavior of the motorcycle 1 differs between a case where the acceleration increase operation is executed and a case where the acceleration increase operation is not executed. Thus, in the case where the acceleration increase operation is executed, and the first notification operation is executed in the same manner as the time when the acceleration increase operation is not executed, the rider is possibly interfered with driving. To handle such a problem, in this embodiment, the execution section 22 of the controller 20 changes the first notification operation according to whether the acceleration increase operation is currently executed. As a result, as will be described below, the notification is appropriately made in the positional relationship adjustment operation of the motorcycle 1.

### <Operation of Controller>

A description will be made on operation of the controller 20 according to the embodiment of the invention with reference to Fig. 4 to Fig. 9.

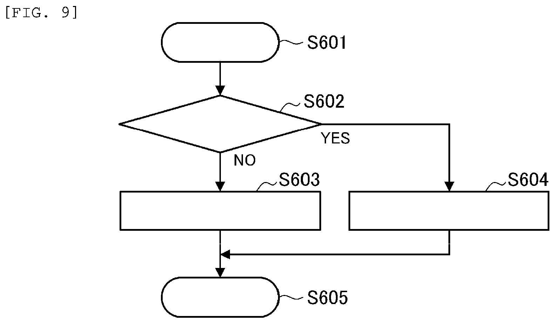

A control flow in Fig. 5 is a detailed control flow of processing as a part of a control flow in Fig. 4 (more specifically, step S103, which will be described below). The control flow in Fig. 4, a control flow in Fig. 6 or Fig. 7, a control flow in Fig. 8, and a control flow in Fig. 9 are sequentially and repeatedly executed (that is, successively executed). However, the control flow in Fig. 4, the control flow in Fig. 6 or Fig. 7, the control flow in Fig. 8, and the control flow in Fig. 9 may be executed simultaneously (that is, may be executed in parallel). A description will hereinafter be made on an example in which each of the control flows in Fig. 4 to Fig. 9 is executed during execution of an adaptive cruise control mode. However, each of the control flows in Fig. 4 to Fig. 9 may be executed during the execution of the positional relationship adjustment operation other than the adaptive cruise control mode.

Fig. 4 is a flowchart illustrating an example of an overall processing procedure that is related to the acceleration increase operation and is executed by the controller 20. The control flow illustrated in Fig. 4 is executed when the adaptive cruise control mode is executed. Step S101 in Fig. 4 corresponds to initiation of the control flow illustrated in Fig. 4. Step S104 in Fig. 4 corresponds to termination of the control flow illustrated in Fig. 4.

When the control flow illustrated in Fig. 4 is initiated, in step S102, the execution section 22 determines whether the rider has the intention to overtake the vehicle ahead 2.

In step S102, for example, in the case where the turn signal on the passing lane side (the right turn signal in the example illustrated in Fig. 3) of the motorcycle 1 is actuated, and the vehicle ahead 2 is detected, the execution section 22 determines that the rider has the intention to overtake the vehicle ahead 2. Information on whether the turn signal is actuated can be acquired from an input device (for example, the input device 14) that is used for an operation to actuate or stop the turn signal, for example. Information on whether the vehicle ahead 2 is detected can be acquired from the surrounding environment sensor 15, for example.

However, the execution section 22 may determine whether the rider has the intention to overtake the vehicle ahead 2 by a method other than the above. For example, the execution section 22 may determine whether the rider has the intention to overtake the vehicle ahead 2 on the basis of information on the rider's behavior (for example, behavior of a line of sight).

If it is determined that the rider has no intention to overtake the vehicle ahead 2 (step S102/NO), the control flow illustrated in Fig. 4 is terminated. On the other hand, if it is determined that the rider has the intention to overtake the vehicle ahead 2 (step S102/YES), the processing proceeds to step S103.

If it is determined YES in step S102, in step S103, the execution section 22 executes the acceleration increase operation, and then the control flow illustrated in Fig. 4 is terminated. As described above, the acceleration increase operation is the operation to assist the rider in overtaking the vehicle ahead 2 by increasing the acceleration of the motorcycle 1.

The acceleration increase operation is terminated when a termination condition is satisfied. An example of the termination condition is a lapse of a predetermined time. The termination condition of the acceleration increase operation may be a condition other than the lapse of the predetermined time (for example, a determination that the acceleration is no longer necessary).

Fig. 5 is a flowchart illustrating an example of the detailed processing procedure in the acceleration increase operation that is executed by the controller 20. The control flow in Fig. 5 is the detailed control flow in step S103 of the control flow in Fig. 4. Step S201 in Fig. 5 corresponds to initiation of the control flow illustrated in Fig. 5. Step S205 in Fig. 5 corresponds to termination of the control flow illustrated in Fig. 5.

When the control flow illustrated in Fig. 5 is initiated, in step S202, the execution section 22 determines target acceleration in the acceleration increase operation. An example of the target acceleration is such a magnitude of the acceleration that the rider can appropriately overtake the vehicle ahead 2.

In step S202, the execution section 22 determines the target acceleration, for example, on the basis of positional relationship information that is information on the positional relationship between the motorcycle 1 and the vehicle ahead 2. The positional relationship information can include information on a relative position, a relative distance, a relative speed, relative acceleration, or relative jerk of the motorcycle 1 to the vehicle ahead 2, information on a passing time difference between the motorcycle 1 and the vehicle ahead 2, or the like, for example. However, the positional relationship information may be information on another physical quantity that can substantially be converted to any of these pieces of the information. The positional relationship information can be acquired on the basis of the surrounding environment information that is acquired from the surrounding environment sensor 15 or the like, for example.

Following step S202, in step S203, the execution section 22 determines required acceleration on the basis of the target acceleration determined in step S202 such that the acceleration of the motorcycle 1 does not exceed upper limit acceleration. The required acceleration is acceleration that is required as the acceleration actually generated to the motorcycle 1 by the acceleration increase operation. In the adaptive cruise control, the upper limit acceleration is set. In the adaptive cruise control, the execution section 22 limits the acceleration of the motorcycle 1 to be equal to or lower than the upper limit acceleration. The upper limit acceleration in the adaptive cruise control is set within a range up to maximum acceleration that is set in the motorcycle 1 for safety reasons.

In step S203, for example, in the case where the target acceleration is equal to or lower than the upper limit acceleration, the execution section 22 determines, as the required acceleration, the same acceleration as the target acceleration. On the other hand, in the case where the target acceleration is higher than the upper limit acceleration, the execution section 22 determines, as the required acceleration, the same acceleration as the upper limit acceleration.

Detailed processing related to setting of the upper limit acceleration will be described below with reference to Fig. 9.

Following step S203, in step S204, the execution section 22 outputs a control command to the engine 11 on the basis of the required acceleration determined in step S203, and then the control flow illustrated in Fig. 5 is terminated.

In step S204, the execution section 22 outputs, to the engine 11, a control command that causes the engine 11 to generate torque corresponding to a difference between the required acceleration and the current acceleration, so as to be able to generate the required acceleration to the motorcycle 1, for example.

The control flow in Fig. 6 and the control flow in Fig. 7 are processing examples related to the first notification operation. For example, one of the control flow in Fig. 6 and the control flow in Fig. 7 is executed by the controller 20. However, as will be described below, the control flow in Fig. 6 and the control flow in Fig. 7 may be executed in combination.

Fig. 6 is a flowchart illustrating an example of a first processing procedure that is related to the first notification operation and is executed by the controller 20. The control flow illustrated in Fig. 6 is executed when the adaptive cruise control mode is executed. Step S301 in Fig. 6 corresponds to initiation of the control flow illustrated in Fig. 6. Step S307 in Fig. 6 corresponds to termination of the control flow illustrated in Fig. 6.

When the control flow illustrated in Fig. 6 is initiated, in step S302, the execution section 22 determines whether the acceleration increase operation is currently executed.

If it is determined that the acceleration increase operation is not currently executed (step S302/NO), the processing proceeds to step S303. Then, in step S303, the execution section 22 switches the setting of the reference collision possibility to a first setting. On the other hand, if it is determined that the acceleration increase operation is currently executed (step S302/YES), the processing proceeds to step S304. Then, in step S304, the execution section 22 switches the setting of the reference collision possibility to a second setting.

As will be described below, in the control flow illustrated in Fig. 6, in the case where it is determined that the collision possibility of the motorcycle 1 with the vehicle ahead 2 exceeds the reference collision possibility, the first notification operation is executed. In the adaptive cruise control, the reference collision possibility is set, and likelihood of executing the first notification operation varies according to the setting of the reference collision possibility. The reference collision possibility set in the second setting differs from the reference collision possibility set in the first setting. That is, the execution section 22 changes the reference collision possibility according to whether the acceleration increase operation is executed during the execution of the adaptive cruise control.

For example, the reference collision possibility set in the second setting may be lower than the reference collision possibility set in the first setting. That is, in the case where the acceleration increase operation is executed during the execution of the adaptive cruise control, the execution section 22 may reduce the reference collision possibility to be lower than that when the acceleration increase operation is not executed. In this case, when the acceleration increase operation is executed, the first notification operation is more likely to be executed than when the acceleration increase operation is not executed. As a result, for example, in the case where the first notification is executed in a process that the motorcycle 1 approaches the vehicle ahead 2, the first notification operation is executed at earlier timing.

Alternatively, for example, the reference collision possibility set in the second setting may be higher than the reference collision possibility set in the first setting. That is, in the case where the acceleration increase operation is executed during the execution of the adaptive cruise control, the execution section 22 may increase the reference collision possibility to be higher than that when the acceleration increase operation is not executed. In this case, when the acceleration increase operation is executed, the first notification operation is less likely to be executed than when the acceleration increase operation is not executed. As a result, for example, in the case where the first notification is executed in the process that the motorcycle 1 approaches the vehicle ahead 2, the first notification operation is executed at later timing.

After step S303 or step S304, in step S305, the execution section 22 determines whether the collision possibility of the motorcycle 1 with the vehicle ahead 2 exceeds the reference collision possibility.

The collision possibility in step S305 means, for example, a possibility that the motorcycle 1 comes into contact with the vehicle ahead 2 even when the motorcycle 1 is decelerated to allowable minimum deceleration (that is, the deceleration with the maximum absolute value) in the adaptive cruise control at the time when the motorcycle 1 follows the vehicle ahead 2.

In step S305, the execution section 22 can determine the collision possibility of the motorcycle 1 with the vehicle ahead 2 on the basis of the positional relationship information (for example, the information on the relative position, the relative distance, the relative speed, the relative acceleration, or the relative jerk of the motorcycle 1 to the vehicle ahead 2, the information on the passing time difference between the motorcycle 1 and the vehicle ahead 2, or the like) that is the information on the positional relationship between the motorcycle 1 and the vehicle ahead 2, for example.

If it is determined that the collision possibility of the motorcycle 1 with the vehicle ahead 2 does not exceed the reference collision possibility (step S305/NO), the control flow illustrated in Fig. 6 is terminated. On the other hand, if it is determined that the collision possibility of the motorcycle 1 with the vehicle ahead 2 exceeds the reference collision possibility (step S305/YES), the processing proceeds to step S306.

If it is determined YES in step S305, in step S306, the execution section 22 executes the first notification operation, and then the control flow illustrated in Fig. 6 is terminated.

In the first notification operation in step S306, as described above, the notification (for example, the notification to avoid the contact between the motorcycle 1 and the vehicle ahead 2) is made to improve the safety.

For example, in the first notification operation, the execution section 22 notifies the rider of a request for an operation to cancel the adaptive cruise control. Examples of the operation to cancel the adaptive cruise control is the operation to cancel the adaptive cruise control by using the input device 14 and the brake operation to cancel the adaptive cruise control. The operation to cancel the adaptive cruise control also includes an operation to rotate an accelerator grip in an opposite direction from a rotational direction in which the accelerator grip is rotated from a position with no load to output an acceleration command.

In addition, for example, in the first notification operation, the execution section 22 notifies the rider of a request for an operation to reduce the acceleration of the motorcycle 1. An example of the operation to reduce the acceleration of the motorcycle 1 is an operation to reduce the operation amount of the accelerator operation (for example, an operation to rotate the accelerator grip in a direction to reduce an operation amount of the accelerator grip) .

The execution section 22 makes the notification in the first notification operation by display on the display device 13, for example. However, the notification in the first notification operation is not limited to this example and can be made by any of various other methods.

For example, as in the above example using the display device 13, the notification in the first notification operation may be made by the display. The notification by the display in the first notification operation may be made by using the display device 13 mounted to the motorcycle 1, or may be made by using a display device mounted to a worn article (such as a helmet) by the rider.

Alternatively, for example, the notification in the first notification operation may be made by sound. The notification by the sound in the first notification operation may be made by using a sound output device mounted to the motorcycle 1, or may be made by using a sound output device mounted to the worn article (such as the helmet) by the rider.

Further alternatively, for example, the notification in the first notification operation may be made by vibration. The notification by the vibration in the first notification operation may be made by using a vibration generator mounted to the motorcycle 1, or may be made by using a vibration generator mounted to the worn article (such as the helmet) by the rider.

Further alternatively, for example, the notification in the first notification operation may be made by the instantaneous deceleration of the motorcycle 1. In this case, the motorcycle 1 may be decelerated instantaneously by using a control unit (for example, the hydraulic pressure control unit 12) for the braking force generated on the wheel, by using the drive source (for example, the engine 11) of the motorcycle 1, or by using a transmission mechanism of the motorcycle 1.

The above description has been made on the examples of the various methods for making the notification in the first notification operation. However, the notification in the first notification operation may be made by combining any of the plural methods. For example, the notification in the first notification operation may be made by the display and the sound.

Fig. 7 is a flowchart illustrating an example of a second processing procedure that is related to the first notification operation and is executed by the controller 20. The control flow illustrated in Fig. 7 is executed when the adaptive cruise control mode is executed. Step S401 in Fig. 7 corresponds to initiation of the control flow illustrated in Fig. 7. Step S404 in Fig. 7 corresponds to termination of the control flow illustrated in Fig. 7.

The second processing in Fig. 7 differs from the above-described first processing in Fig. 6 in that step S303 and step S304 are replaced with step S402 and step S403. In the second processing illustrated in Fig. 7, if it is determined NO in step S302 (that is, if it is determined that the acceleration increase operation is not currently executed), the processing proceeds to step S402. Then, in step S402, the execution section 22 switches a setting of perceptibility of the notification in the first notification operation to a first setting. On the other hand, if it is determined YES in step S302 (that is, if it is determined that the acceleration increase operation is currently executed), the processing proceeds to step S403. Then, in step S403, the execution section 22 switches the setting of the perceptibility of the notification in the first notification operation to a second setting.

In the adaptive cruise control, the perceptibility of the notification in the first notification operation is set, and the first notification operation is executed such that the perceptibility of the notification in the first notification operation matches the set perceptibility. The perceptibility of the notification in the first notification operation means, for example, ease of recognition of the notification in the first notification operation by the rider. The perceptibility set in the second setting differs from the perceptibility set in the first setting. That is, the execution section 22 changes the perceptibility of the notification in the first notification operation according to whether the acceleration increase operation is executed during the execution of the adaptive cruise control.

For example, the perceptibility set in the second setting may be stronger than the perceptibility set in the first setting. That is, in the case where the acceleration increase operation is executed during the execution of the adaptive cruise control, the execution section 22 may make the perceptibility of the notification in the first notification operation stronger than that when the acceleration increase operation is not executed. For example, in the case where the notification in the first notification operation is made by the display, the perceptibility of the notification in the first notification operation can be made strong by widening a display area, by increasing display brightness, by changing a display color, or the like. For example, in the case where the notification in the first notification operation is made by the sound, the perceptibility of the notification in the first notification operation can be made strong by increasing sound volume, by increasing a pitch of the sound, or the like. For example, in the case where the notification in the first notification operation is made by the vibration, the perceptibility of the notification in the first notification operation can be made strong by increasing intensity of the vibration or the like.

For example, the perceptibility set in the second setting may be weaker than the perceptibility set in the first setting. That is, in the case where the acceleration increase operation is executed during the execution of the adaptive cruise control, the execution section 22 may make the perceptibility of the notification in the first notification operation weaker than that when the acceleration increase operation is not executed. For example, in the case where the notification in the first notification operation is made by the display, the perceptibility of the notification in the first notification operation can be made weak by narrowing the display area, by reducing the display brightness, by changing the display color, or the like. For example, in the case where the notification in the first notification operation is made by the sound, the perceptibility of the notification in the first notification operation can be made weak by reducing the sound volume, by lowering the pitch of the sound, or the like. For example, in the case where the notification in the first notification operation is made by the vibration, the perceptibility of the notification in the first notification operation can be made weak by reducing the intensity of the vibration or the like.

After step S402 or step S403, the processing proceeds to step S305, and the same processing as the above-described first processing in Fig. 6 is executed. However, in the second processing illustrated in Fig. 7, in step S306, the execution section 22 executes the first notification operation such that the perceptibility of the notification in the first notification operation matches the set perceptibility.

In the processing example illustrated in Fig. 6 or Fig. 7, the execution section 22 of the controller 20 changes the first notification operation according to whether the acceleration increase operation is currently executed. As a result, in the case where the acceleration increase operation is executed during the execution of the adaptive cruise control, the first notification operation can be executed by taking the execution of the acceleration increase operation into consideration. Therefore, it is possible to optimize the notification in the adaptive cruise control of the motorcycle 1.

More specifically, in the first processing illustrated in Fig. 6, the execution section 22 changes the reference collision possibility according to whether the acceleration increase operation is executed during the execution of the adaptive cruise control.

For example, in the case where the acceleration increase operation is executed during the execution of the adaptive cruise control, the execution section 22 may reduce the reference collision possibility to be lower than that when the acceleration increase operation is not executed. As a result, for example, as indicated by the broken arrow A2 in the example illustrated in Fig. 3, in the case where the acceleration increase operation is executed, but the rider hesitates to overtake the vehicle ahead 2 and does not overtake the vehicle ahead 2, the first notification operation is executed at the earlier timing. Therefore, it is possible to further improve the safety.

For example, in the case where the acceleration increase operation is executed during the execution of the adaptive cruise control, the execution section 22 may increase the reference collision possibility to be higher than that when the acceleration increase operation is not executed. As a result, in the case where the rider has the intention to overtake the vehicle ahead 2, and the acceleration increase operation is executed, it is possible to make the first notification operation less likely to be executed. Therefore, it is possible to suppress loss of concentration of the rider, who has the intention to overtake the vehicle ahead 2, due to the unnecessary execution of the first notification operation during the execution of the acceleration increase operation.

In the second processing illustrated in Fig. 7, the execution section 22 changes the perceptibility of the notification in the first notification operation according to whether the acceleration increase operation is executed during the execution of the adaptive cruise control.

For example, in the case where the acceleration increase operation is executed during the execution of the adaptive cruise control, the execution section 22 may make the perceptibility of the notification in the first notification operation stronger than that when the acceleration increase operation is not executed. As a result, for example, as indicated by the broken arrow A2 in the example illustrated in Fig. 3, in the case where the acceleration increase operation is executed, but the rider hesitates to overtake the vehicle ahead 2 and does not overtake the vehicle ahead 2, it is possible to strengthen the perceptibility of the notification in the first notification operation. Therefore, it is possible to further improve the safety.

For example, in the case where the acceleration increase operation is executed during the execution of the adaptive cruise control, the execution section 22 may make the perceptibility of the notification in the first notification operation weaker than that when the acceleration increase operation is not executed. As a result, in the case where the rider has the intention to overtake the vehicle ahead 2, and the acceleration increase operation is executed, it is possible to weaken the perceptibility of the notification in the first notification operation. Therefore, it is possible to suppress the loss of the concentration of the rider, who has the intention to overtake the vehicle ahead 2, due to the execution of the first notification operation during the execution of the acceleration increase operation.

Fig. 8 is a flowchart illustrating an example of a processing procedure that is related to second notification operation and is executed by the controller 20. The control flow illustrated in Fig. 8 is executed when the adaptive cruise control mode is executed. Step S501 in Fig. 8 corresponds to initiation of the control flow illustrated in Fig. 8. Step S504 in Fig. 8 corresponds to termination of the control flow illustrated in Fig. 8.

When the control flow illustrated in Fig. 8 is initiated, in step S502, the execution section 22 determines whether the acceleration increase operation is currently executed.

If it is determined that the acceleration increase operation is not currently executed (step S502/NO), the control flow illustrated in Fig. 8 is terminated. On the other hand, if it is determined that the acceleration increase operation is currently executed (step S502/YES), the processing proceeds to step S503.

If it is determined YES in step S502, in step S503, the execution section 22 executes the second notification operation, and then the control flow illustrated in Fig. 8 is terminated.

In the second notification operation in step S503, the rider is notified of the acceleration increase operation. For example, in the second notification operation, the execution section 22 notifies the rider that the acceleration increase operation is currently executed. In addition, for example, in the second notification operation, the execution section 22 notifies the rider of information on a control parameter in the acceleration increase operation. The control parameters in the acceleration increase operation are various parameters that are used for the control in the acceleration increase operation. Examples of the control parameters are the required acceleration and the upper limit acceleration in the acceleration increase operation. The information on the control parameter can include information on a value of the control parameter itself, information that indicates a magnitude of the value of the control parameter in a stepwise manner, and the like. However, in addition to the execution of the acceleration increase operation, in the second notification operation, the execution section 22 may notify the rider of the information on the control parameter in the acceleration increase operation.

For example, the execution section 22 makes the notification in the second notification operation by the display on the display device 13. However, similar to the notification in the first notification operation, the notification in the second notification operation is not limited to this example and can be made by any of various other methods.

For example, similar to the notification in the first notification operation, the notification in the second notification operation may be made by the sound, may be made by the vibration, or may be made by the instantaneous deceleration of the motorcycle 1. In addition, similar to the notification in the first notification operation, the notification in the second notification operation may be made by using the device mounted to the motorcycle 1, or may be made by using the device mounted to the worn article (such as the helmet) by the rider. Furthermore, the notification in the second notification operation may be made by combining any of the plural methods.

The above description has been made with reference to Fig. 8 on the example in which the second notification operation is executed when it is determined that the acceleration increase operation is currently executed. However, the second notification operation may be executed in the case where it is determined that the acceleration increase operation is executed in the future (more specifically, in the near future). For example, there is a case where the acceleration increase operation is executed after a predetermined time elapses from a time point at which the rider actuates the turn signal on the passing lane side and it is determined that the rider has the intention to overtake the vehicle ahead 2. In this case, the execution section 22 may execute the second notification operation in a period after it is determined that the rider has the intention to overtake the vehicle ahead 2 and before the acceleration increase operation is executed. In such a case, in the second notification operation, the execution section 22 may notify the rider of the future execution of the acceleration increase operation instead of the current execution of the acceleration increase operation.

In the processing example illustrated in Fig. 8, the execution section 22 of the controller 20 executes the second notification operation to notify the rider of the acceleration increase operation. As a result, the rider can drive while comprehending an execution status of the acceleration increase operation. Therefore, the rider can easily drive according to his/her intention.

Fig. 9 is a flowchart illustrating an example of a processing procedure that is related to setting of the upper limit acceleration and is executed by the controller 20. The control flow illustrated in Fig. 9 is executed when the adaptive cruise control mode is executed. Step S601 in Fig. 9 corresponds to initiation of the control flow illustrated in Fig. 9. Step S605 in Fig. 9 corresponds to termination of the control flow illustrated in Fig. 9.

When the control flow illustrated in Fig. 9 is initiated, in step S602, the execution section 22 determines whether the acceleration increase operation is currently executed.

If it is determined that the acceleration increase operation is not currently executed (step S602/NO), the processing proceeds to step S603. Then, in step S603, the execution section 22 switches the setting of the upper limit acceleration in the adaptive cruise control mode to a first setting. On the other hand, if it is determined that the acceleration increase operation is currently executed (step S602/YES), the processing proceeds to step S604. Then, in step S604, the execution section 22 switches the setting of the upper limit acceleration in the adaptive cruise control mode to a second setting. After step S603 or step S604, the control flow illustrated in Fig. 9 is terminated.

In the adaptive cruise control, the upper limit acceleration is set. In the adaptive cruise control, the execution section 22 limits the acceleration of the motorcycle 1 to be equal to or lower than the upper limit acceleration. The upper limit acceleration set in the second setting is higher than the upper limit acceleration set in the first setting. That is, in the case where the acceleration increase operation is executed during the execution of the adaptive cruise control, the execution section 22 increases the upper limit acceleration to be higher than that when the acceleration increase operation is not executed. The upper limit acceleration set in the second setting may be a fixed value or may be a value that varies according to any of various parameters (for example, the speed of the motorcycle 1, and the like).

In the processing example illustrated in Fig. 9, in the case where the acceleration increase operation is executed during the execution of the adaptive cruise control, the execution section 22 of the controller 20 increases the upper limit acceleration to be higher than that when the acceleration increase operation is not executed. As a result, it is possible to improve an ability to increase the acceleration by the acceleration increase operation. Therefore, it is possible to further effectively assist the rider in overtaking the vehicle ahead 2.

### <Effects of Controller>

A description will be made on effects of the controller 20 according to the embodiment of the invention.

The controller 20 includes the execution section 22 that executes the positional relationship adjustment operation (in the above example, the adaptive cruise control) to automatically control the speed of the motorcycle 1 such that the positional relationship between the motorcycle 1 and the vehicle ahead 2 of the motorcycle 1 approaches the target positional relationship. Then, in the case where the collision possibility of the motorcycle 1 with the vehicle ahead 2 exceeds the reference collision possibility during the execution of the positional relationship adjustment operation, the execution section 22 executes the first notification operation to notify the rider of the motorcycle 1. Thereafter, in the case where it is determined that the rider has the intention to overtake the vehicle ahead 2, the execution section 22 executes the acceleration increase operation to increase the acceleration of the motorcycle 1, and changes the first notification operation according to whether the acceleration increase operation is currently executed. As a result, in the case where the acceleration increase operation is executed during the execution of the positional relationship adjustment operation, the first notification operation can be executed by taking the execution of the acceleration increase operation into consideration. Therefore, it is possible to optimize the notification in the positional relationship adjustment operation of the motorcycle 1.

Preferably, in the controller 20, the execution section 22 changes the reference collision possibility according to whether the acceleration increase operation is executed during the execution of the positional relationship adjustment operation (in the above example, the adaptive cruise control). As a result, in the case where the acceleration increase operation is executed during the execution of the positional relationship adjustment operation, it is possible to adjust the likelihood of executing the first notification operation by taking the execution of the acceleration increase operation into consideration. Therefore, it is possible to appropriately optimize the notification in the positional relationship adjustment operation of the motorcycle 1.

Preferably, in the case where the acceleration increase operation is executed during the execution of the positional relationship adjustment operation (in the above example, the adaptive cruise control), in the controller 20, the execution section 22 reduces the reference collision possibility to be lower than that when the acceleration increase operation is not executed. As a result, for example, as indicated by the broken arrow A2 in the example illustrated in Fig. 3, in the case where the acceleration increase operation is executed, but the rider hesitates to overtake the vehicle ahead 2 and does not overtake the vehicle ahead 2, the first notification operation is executed at the earlier timing. Therefore, it is possible to further improve the safety.

Preferably, in the controller 20, in the case where the acceleration increase operation is executed during the execution of the positional relationship adjustment operation (in the above example, the adaptive cruise control), the execution section 22 increases the reference collision possibility to be higher than that when the acceleration increase operation is not executed. As a result, in the case where the rider has the intention to overtake the vehicle ahead 2, and the acceleration increase operation is executed, it is possible to make the first notification operation less likely to be executed. Therefore, it is possible to suppress the loss of the concentration of the rider, who has the intention to overtake the vehicle ahead 2, due to the unnecessary execution of the first notification operation during the execution of the acceleration increase operation.

Preferably, in the controller 20, the execution section 22 changes the perceptibility of the notification in the first notification operation according to whether the acceleration increase operation is executed during the execution of the positional relationship adjustment operation (in the above example, the adaptive cruise control). As a result, in the case where the acceleration increase operation is executed during the execution of the positional relationship adjustment operation, it is possible to adjust the perceptibility of the notification in the first notification operation by taking the execution of the acceleration increase operation into consideration. Therefore, it is possible to appropriately optimize the notification in the positional relationship adjustment operation of the motorcycle 1.

Preferably, in the case where the acceleration increase operation is executed during the execution of the positional relationship adjustment operation (in the above example, the adaptive cruise control), in the controller 20, the execution section 22 makes the perceptibility of the notification in the first notification operation stronger than that when the acceleration increase operation is not executed. As a result, for example, as indicated by the broken arrow A2 in the example illustrated in Fig. 3, in the case where the acceleration increase operation is executed, but the rider hesitates to overtake the vehicle ahead 2 and does not overtake the vehicle ahead 2, it is possible to strengthen the perceptibility of the notification in the first notification operation. Therefore, it is possible to further improve the safety.

Preferably, in the case where the acceleration increase operation is executed during the execution of the positional relationship adjustment operation (in the above example, the adaptive cruise control), in the controller 20, the execution section 22 makes the perceptibility of the notification in the first notification operation weaker than that when the acceleration increase operation is not executed. As a result, in the case where the rider has the intention to overtake the vehicle ahead 2, and the acceleration increase operation is executed, it is possible to weaken the perceptibility of the notification in the first notification operation. Therefore, it is possible to suppress the loss of the concentration of the rider, who has the intention to overtake the vehicle ahead 2, due to the execution of the first notification operation during the execution of the acceleration increase operation.

Preferably, in the controller 20, the execution section 22 executes the second notification operation to notify the rider of the acceleration increase operation. As a result, the rider can drive while comprehending the execution status of the acceleration increase operation. Therefore, the rider can easily drive according to his/her intention.

Preferably, in the controller 20, in the second notification operation, the execution section 22 notifies the rider of the future execution or the current execution of the acceleration increase operation. As a result, the rider can drive while comprehending the future execution or the current execution of the acceleration increase operation. Therefore, the rider can appropriately and easily drive according to his/her intention.

Preferably, in the controller 20, in the second notification operation, the execution section 22 notifies the rider of the information on the control parameter in the acceleration increase operation. As a result, the rider can drive while comprehending the information on the control parameter in the acceleration increase operation. Therefore, the rider can appropriately and easily drive according to his/her intention.

Preferably, in the controller 20, the execution section 22 limits the acceleration of the motorcycle 1 to be equal to or lower than the upper limit acceleration in the positional relationship adjustment operation (in the above example, the adaptive cruise control). Then, in the case where the acceleration increase operation is executed during the execution of the positional relationship adjustment operation, the execution section 22 increases the upper limit acceleration to be higher than that when the acceleration increase operation is not executed. As a result, it is possible to improve the ability to increase the acceleration by the acceleration increase operation. Therefore, it is possible to further effectively assist the rider in overtaking the vehicle ahead 2.

Preferably, in the controller 20, in the first notification operation, the execution section 22 notifies the rider of the request for the operation to cancel the positional relationship adjustment operation (in the above example, the adaptive cruise control). As a result, the contact between the motorcycle 1 and the vehicle ahead 2, or the like is avoided by the first notification operation, and the safety is thereby improved.

Preferably, in the controller 20, in the first notification operation, the execution section 22 notifies the rider of the request for the operation to reduce the acceleration of the motorcycle 1. As a result, the contact between the motorcycle 1 and the vehicle ahead 2, or the like is avoided by the first notification operation, and the safety is thereby improved.

The invention is not limited to the embodiment that has been described and is defined by the appended claims. For example, only a part of the embodiment may be implemented. For example, the control flow in Fig. 6 and the control flow in Fig. 7 may be used in combination. That is, the execution section 22 may change both of the reference collision possibility and the perceptibility of the notification in the first notification operation according to whether the acceleration increase operation is executed during the execution of the positional relationship adjustment operation (in the above example, the adaptive cruise control). In addition, for example, at least one of the control flow in Fig. 8 and the control flow in Fig. 9 may not be executed.

### Reference Signs List

1: Motorcycle
2: Vehicle ahead
11: Engine
12: Hydraulic pressure control unit
13: Display device
14: Input device
15: Surrounding environment sensor
16: Front-wheel rotational frequency sensor
17: Rear-wheel rotational frequency sensor
20: Controller
21: Acquisition section
22: Execution section
A1: Solid arrow
A2: Broken arrow
L1: Lane
L2: Lane
LV: Lane boundary

## Claims

1. A controller (20) that controls behavior of a motorcycle (1), the controller comprising:
an execution section (22) that executes positional relationship adjustment operation to automatically control a speed of the motorcycle (1) such that a positional relationship between the motorcycle (1) and a vehicle ahead (2) of the motorcycle (1) approaches a target positional relationship, wherein
during execution of the positional relationship adjustment operation, the execution section (22)
executes first notification operation to notify a rider of the motorcycle (1) in the case where a collision possibility of the motorcycle (1) with the vehicle ahead (2) exceeds a reference collision possibility,
executes acceleration increase operation to increase acceleration of the motorcycle (1) in the case where it is determined that the rider has an intention to overtake the vehicle ahead (2), and
changes the first notification operation according to whether the acceleration increase operation is currently executed.

2. The controller according to claim 1, wherein
the execution section (22) changes the reference collision possibility according to whether the acceleration increase operation is executed during the execution of the positional relationship adjustment operation.

3. The controller according to claim 2, wherein
in the case where the acceleration increase operation is executed during the execution of the positional relationship adjustment operation, the execution section (22) reduces the reference collision possibility to be lower than that when the acceleration increase operation is not executed, or
in the case where the acceleration increase operation is executed during the execution of the positional relationship adjustment operation, the execution section (22) increases the reference collision possibility to be higher than that when the acceleration increase operation is not executed.

4. The controller according to claim 1, wherein
the execution section (22) changes perceptibility of the notification in the first notification operation according to whether the acceleration increase operation is executed during the execution of the positional relationship adjustment operation.

5. The controller according to claim 4, wherein
in the case where the acceleration increase operation is executed during the execution of the positional relationship adjustment operation, the execution section (22) makes the perceptibility stronger than that when the acceleration increase operation is not executed or in the case where the acceleration increase operation is executed during the execution of the positional relationship adjustment operation, the execution section (22) makes the perceptibility weaker than that when the acceleration increase operation is not executed.

6. The controller according to claim 1, wherein
the execution section (22) executes second notification operation to notify the rider of the acceleration increase operation.

7. The controller according to claim 6, wherein
in the second notification operation, the execution section (22) notifies the rider that the acceleration increase operation is executed in the future or is currently executed.

8. The controller according to claim 6, wherein
in the second notification operation, the execution section (22) notifies the rider of information on a control parameter in the acceleration increase operation.

9. The controller according to claim 1, wherein
the execution section (22)
limits the acceleration to be equal to or lower than an upper limit acceleration in the positional relationship adjustment operation, and
increases the upper limit acceleration to be higher than that when the acceleration increase operation is not executed in the case where the acceleration increase operation is executed during the execution of the positional relationship adjustment operation.

10. The controller according to any one of claims 1 to 9, wherein
in the first notification operation, the execution section (22) notifies the rider of a request for an operation to cancel the positional relationship adjustment operation.

11. The controller according to any one of claims 1 to 9, wherein
in the first notification operation, the execution section (22) notifies the rider of a request for an operation to reduce the acceleration.

12. A control method for controlling behavior of a motorcycle (1), the control method comprising:
executing positional relationship adjustment operation by an execution section (22) of a controller (20) to automatically control a speed of the motorcycle (1) such that a positional relationship between the motorcycle (1) and a vehicle ahead (2) of the motorcycle (1) approaches a target positional relationship, wherein
during execution of the positional relationship adjustment operation, the execution section (22)
executes first notification operation to notify a rider of the motorcycle (1) in the case where a collision possibility of the motorcycle (1) with the vehicle ahead (2) exceeds a reference collision possibility,
executes acceleration increase operation to increase acceleration of the motorcycle (1) in the case where it is determined that the rider has an intention to overtake the vehicle ahead (2), and
changes the first notification operation according to whether the acceleration increase operation is currently executed.

## Patentansprüche

1. Steuerung (20), die das Verhalten eines Motorrads (1) steuert, wobei die Steuerung Folgendes umfasst:
einen Ausführungsabschnitt (22), der eine Positionsbeziehungsanpassungsoperation ausführt, um automatisch eine Geschwindigkeit des Motorrads (1) so zu steuern, dass sich eine Positionsbeziehung zwischen dem Motorrad (1) und einem dem Motorrad (1) vorausfahrenden Fahrzeug (2) einer Zielpositionsbeziehung nähert, wobei während der Ausführung der Positionsbeziehungsanpassungsoperation, der Ausführungsabschnitt (22)
eine erste Benachrichtigungsoperation ausführt, um einen Fahrer des Motorrads (1) zu benachrichtigen, falls eine Wahrscheinlichkeit einer Kollision des Motorrads (1) mit dem vorausfahrenden Fahrzeug (2) eine Referenzkollisionswahrscheinlichkeit überschreitet,
eine Beschleunigungserhöhungsoperation ausführt, um die Beschleunigung des Motorrads (1) zu erhöhen, falls bestimmt wird, dass der Fahrer eine Absicht hat, das vorausfahrende Fahrzeug (2) zu überholen, und
die erste Benachrichtigungsoperation ändert, je nachdem, ob die Beschleunigungserhöhungsoperation aktuell ausgeführt wird.

2. Steuerung nach Anspruch 1, wobei
der Ausführungsabschnitt (22) die Referenzkollisionswahrscheinlichkeit ändert, je nachdem, ob die Beschleunigungserhöhungsoperation während der Ausführung der Positionsbeziehungsanpassungsoperation ausgeführt wird.

3. Steuerung nach Anspruch 2, wobei
in dem Fall, in dem die Beschleunigungserhöhungsoperation während der Ausführung der Positionsbeziehungsanpassungsoperation ausgeführt wird, der Ausführungsabschnitt (22) die Referenzkollisionswahrscheinlichkeit verringert, sodass diese niedriger als in dem Fall ist, in dem die Beschleunigungserhöhungsoperation nicht ausgeführt wird, oder
in dem Fall, in dem die Beschleunigungserhöhungsoperation während der Ausführung der Positionsbeziehungsanpassungsoperation ausgeführt wird, der Ausführungsabschnitt (22) die Referenzkollisionswahrscheinlichkeit erhöht, sodass diese höher als in dem Fall ist, in dem die Beschleunigungserhöhungsoperation nicht ausgeführt wird.

4. Steuerung nach Anspruch 1, wobei
der Ausführungsabschnitt (22) die Wahrnehmbarkeit der Benachrichtigung in der ersten Benachrichtigungsoperation ändert, je nachdem, ob die Beschleunigungserhöhungsoperation während der Ausführung der Positionsbeziehungsanpassungsoperation ausgeführt wird.

5. Steuerung nach Anspruch 4, wobei
in dem Fall, in dem die Beschleunigungserhöhungsoperation während der Ausführung der Positionsbeziehungsanpassungsoperation ausgeführt wird, der Ausführungsabschnitt (22) die Wahrnehmbarkeit stärker als in dem Fall macht, in dem die Beschleunigungserhöhungsoperation nicht ausgeführt wird, oder in dem Fall, in dem die Beschleunigungserhöhungsoperation während der Ausführung der Positionsbeziehungsanpassungsoperation ausgeführt wird, der Ausführungsabschnitt (22) die Wahrnehmbarkeit schwächer als in dem Fall macht, in dem die Beschleunigungserhöhungsoperation nicht ausgeführt wird.

6. Steuerung nach Anspruch 1, wobei
der Ausführungsabschnitt (22) eine zweite Benachrichtigungsoperation ausführt, um den Fahrer über die Beschleunigungserhöhungsoperation zu benachrichtigen.

7. Steuerung nach Anspruch 6, wobei
in der zweiten Benachrichtigungsoperation, der Ausführungsabschnitt (22) den Fahrer benachrichtigt, dass die Beschleunigungserhöhungsoperation in der Zukunft ausgeführt wird oder aktuell ausgeführt wird.

8. Steuerung nach Anspruch 6, wobei
in der zweiten Benachrichtigungsoperation, der Ausführungsabschnitt (22) den Fahrer über Informationen zu einem Steuerungsparameter in der Beschleunigungserhöhungsoperation benachrichtigt.

9. Steuerung nach Anspruch 1, wobei
der Ausführungsabschnitt (22)
die Beschleunigung begrenzt, um gleich oder niedriger als eine obere Grenzbeschleunigung in der Positionsbeziehungsanpassungsoperation zu sein, und
die obere Grenzbeschleunigung so erhöht, dass sie höher ist als in dem Fall, in dem die Beschleunigungserhöhungsoperation nicht ausgeführt wird, falls die Beschleunigungserhöhungsoperation während der Ausführung der Positionsbeziehungsanpassungsoperation ausgeführt wird.

10. Steuerung nach einem der Ansprüche 1 bis 9, wobei in der ersten Benachrichtigungsoperation, der Ausführungsabschnitt (22) den Fahrer über eine Anforderung einer Operation zum Abbrechen der Positionsbeziehungsanpassungsoperation benachrichtigt.

11. Steuerung nach einem der Ansprüche 1 bis 9, wobei in der ersten Benachrichtigungsoperation, der Ausführungsabschnitt (22) den Fahrer über eine Anforderung für eine Operation zum Reduzieren der Beschleunigung benachrichtigt.

12. Steuerungsverfahren zur Steuerung des Verhaltens eines Motorrads (1), wobei das Steuerungsverfahren Folgendes umfasst:
Ausführen einer Positionsbeziehungsanpassungsoperation durch einen Ausführungsabschnitt (22) einer Steuerung (20) zum automatischen Steuern einer Geschwindigkeit des Motorrads (1), so dass sich eine Positionsbeziehung zwischen dem Motorrad (1) und einem vorausfahrenden Fahrzeug (2) des Motorrads (1) einer Zielpositionsbeziehung nähert, wobei
während der Ausführung der Positionsbeziehungsanpassungsoperation, der Ausführungsabschnitt (22)
eine erste Benachrichtigungsoperation ausführt, um einen Fahrer des Motorrads (1) zu benachrichtigen, falls eine Wahrscheinlichkeit einer Kollision des Motorrads (1) mit dem vorausfahrenden Fahrzeug (2) eine Referenzkollisionswahrscheinlichkeit überschreitet,
eine Beschleunigungserhöhungsoperation ausführt, um die Beschleunigung des Motorrads (1) zu erhöhen, falls bestimmt wird, dass der Fahrer eine Absicht hat, das vorausfahrende Fahrzeug (2) zu überholen, und
die erste Benachrichtigungsoperation ändert, je nachdem, ob die Beschleunigungserhöhungsoperation aktuell ausgeführt wird.

## Revendications

1. Appareil de commande (20) qui commande le comportement d'une motocyclette (1), l'appareil de commande comprenant :
une section d'exécution (22) qui exécute une opération d'ajustement de relation de position pour commander automatiquement une vitesse de la motocyclette (1) de telle sorte qu'une relation de position entre la motocyclette (1) et un véhicule qui précède (2) la motocyclette (1) approche d'une relation de position cible, dans lequel
pendant l'exécution de l'opération d'ajustement de relation de position, la section d'exécution (22)
exécute une première opération de notification pour avertir un motocycliste de la motocyclette (1) dans le cas où une possibilité de collision de la motocyclette (1) avec le véhicule qui précède (2) dépasse une possibilité de collision de référence,
exécute une opération d'augmentation d'accélération pour augmenter l'accélération de la motocyclette (1) dans le cas où il est déterminé que le motocycliste a une intention de dépasser le véhicule qui précède (2), et
modifie la première opération de notification selon que l'opération d'augmentation d'accélération est actuellement exécutée ou non.

2. Appareil de commande selon la revendication 1, dans lequel
la section d'exécution (22) modifie la possibilité de collision de référence selon que l'opération d'augmentation d'accélération est exécutée pendant l'exécution de l'opération d'ajustement de relation de position ou non.

3. Appareil de commande selon la revendication 2, dans lequel
dans le cas où l'opération d'augmentation d'accélération est exécutée pendant l'exécution de l'opération d'ajustement de relation de position, la section d'exécution (22) réduit la possibilité de collision de référence pour qu'elle soit inférieure à celle lorsque l'opération d'augmentation d'accélération n'est pas exécutée, ou
dans le cas où l'opération d'augmentation d'accélération est exécutée pendant l'exécution de l'opération d'ajustement de relation de position, la section d'exécution (22) augmente la possibilité de collision de référence pour qu'elle soit supérieure à celle lorsque l'opération d'augmentation d'accélération n'est pas exécutée.

4. Appareil de commande selon la revendication 1, dans lequel
la section d'exécution (22) modifie la perceptibilité de la notification dans la première opération de notification selon que l'opération d'augmentation d'accélération est exécutée pendant l'exécution de l'opération d'ajustement de relation de position ou non.

5. Appareil de commande selon la revendication 4, dans lequel
dans le cas où l'opération d'augmentation d'accélération est exécutée pendant l'exécution de l'opération d'ajustement de relation de position, la section d'exécution (22) rend la perceptibilité plus forte que celle lorsque l'opération d'augmentation d'accélération n'est pas exécutée ou dans le cas où l'opération d'augmentation d'accélération est exécutée pendant l'exécution de l'opération d'ajustement de relation de position, la section d'exécution (22) rend la perceptibilité plus faible que celle lorsque l'opération d'augmentation d'accélération n'est pas exécutée.

6. Appareil de commande selon la revendication 1, dans lequel
la section d'exécution (22) exécute une seconde opération de notification pour notifier au motocycliste l'opération d'augmentation d'accélération.

7. Appareil de commande selon la revendication 6, dans lequel
dans la seconde opération de notification, la section d'exécution (22) notifie au motocycliste que l'opération d'augmentation d'accélération est exécutée à l'avenir ou actuellement exécutée.

8. Appareil de commande selon la revendication 6, dans lequel
dans la seconde opération de notification, la section d'exécution (22) notifie au motocycliste des informations sur un paramètre de commande dans l'opération d'augmentation d'accélération.

9. Appareil de commande selon la revendication 1, dans lequel
la section d'exécution (22)
limite l'accélération pour qu'elle soit égale ou inférieure à une accélération limite supérieure dans l'opération d'ajustement de relation de position, et
augmente l'accélération limite supérieure pour qu'elle soit supérieure à celle lorsque l'opération d'augmentation d'accélération n'est pas exécutée dans le cas où l'opération d'augmentation d'accélération est exécutée pendant l'exécution de l'opération d'ajustement de relation de position.

10. Appareil de commande selon l'une quelconque des revendications 1 à 9, dans lequel
dans la première opération de notification, la section d'exécution (22) notifie au motocycliste une demande pour une opération d'annulation de l'opération d'ajustement de relation de position.

11. Appareil de commande selon l'une quelconque des revendications 1 à 9, dans lequel
dans la première opération de notification, la section d'exécution (22) notifie au motocycliste une demande pour une opération de réduction de l'accélération.

12. Procédé de commande pour commander le comportement d'une motocyclette (1), le procédé de commande comprenant :
l'exécution d'une opération d'ajustement de relation de position par une section d'exécution (22) d'un appareil de commande (20) pour commander automatiquement une vitesse de la motocyclette (1) de telle sorte qu'une relation de position entre la motocyclette (1) et un véhicule qui précède (2) la motocyclette (1) approche d'une relation de position cible, dans lequel
pendant l'exécution de l'opération d'ajustement de relation de position, la section d'exécution (22)
exécute une première opération de notification pour avertir un motocycliste de la motocyclette (1) dans le cas où une possibilité de collision de la motocyclette (1) avec le véhicule qui précède (2) dépasse une possibilité de collision de référence,
exécute une opération d'augmentation d'accélération pour augmenter l'accélération de la motocyclette (1) dans le cas où il est déterminé que le motocycliste a une intention de dépasser le véhicule qui précède (2), et
modifie la première opération de notification selon que l'opération d'augmentation d'accélération est actuellement exécutée ou non.
